# EUROPEAN PATENT APPLICATION

(11) **EP 4 538 131 A1**
(43) Date of publication of application: **16.04.2025**
(21) Application number: 23818903.9
(22) Date of filing: 17.05.2023
(51) Int. Cl.: B60W 30/182, B60W 60/00, B60W 50/00, B60W 40/02, B60W 40/06

(54) **AUTONOMOUS DRIVING CONTROL METHOD AND APPARATUS FOR VEHICLE, AND COMPUTER STORAGE MEDIUM**

(30) Priority: 10.06.2022 CN 202210657661
(71) Applicant: Ningbo Lotus Robotics Co., Ltd., Ningbo, Zhejiang 315335 (CN)
(72) Inventor: XIONG, Jian, Wuhan, Hubei 430058 (CN)
(74) Representative: Barker Brettell LLP
(86) International application number: PCT/CN2023/094733
(87) International publication number: WO 2023/236738

(57) **Abstract**

A control method and apparatus for vehicle automatic driving, and a computer storage medium; where the control method includes: acquiring vehicle perception information of a target vehicle; performing driving scene recognition based on the vehicle perception information to obtain a driving scene recognition result; controlling the target vehicle to enter a safe autonomous driving mode in a case that the driving scene recognition result represents that the target vehicle is in a sub-extreme driving scene; where an adverse factor for driving in the sub-extreme driving scene is less than the adverse factor for driving in an extreme driving scene and greater than the adverse factor for driving in a normal driving scene.

## Description

### TECHNICAL FIELD

The present application relates to the field of vehicle driving technology, and in particular, to a control method and apparatus for vehicle autonomous driving, and a computer storage medium.

### BACKGROUND

An end-to-end autonomous driving function refers to the autonomous driving function of an vehicle from a start position to an end position after setting a destination. The end-to-end autonomous driving function uses a high-precision map, satellite positioning, a front camera, a front radar, a 360° surround view system, an angle radar, a lidar and other devices for information fusion to plan a preset autonomous driving route, while connecting with a body system to control the vehicle to keep driving within a safe and stable range. A driver does not need to perform any operations in a process of full-self driving, thus reducing driving intensity of the driver.

A perception module of the end-to-end autonomous driving function has a powerful perception function, which can accurately recognize things around the vehicle. Recognition of things includes recognition of an object type, a motion state, a relative position with the vehicle and other information; at the same time, the current autonomous driving environment can be automatically recognized. However, in the prior art, the vehicle will request the driver to take over the driving and exit the autonomous driving in extreme scenes, including: rainstorm, blizzard, sandstorm and severe ice on the road, etc. In an actual driving process, driving scenes for driving are mostly sub-extreme scenes, which include scenes such as heavy rain, heavy snow, moderate dust and water on the road. There is no autonomous driving method for sub-extreme scenes in the prior art.

### SUMMARY

In view of the above problems of the prior art, an objective of the present application is to cope with sub-extreme scenes by presetting a safe autonomous driving mode to improve the safety of vehicle autonomous driving in the sub-extreme scenes, and to improve the driving scenes applicability of autonomous driving.

In order to solve the above problems, the present application provides a control method for vehicle autonomous driving, including:
acquiring vehicle perception information of a target vehicle;
performing driving scene recognition based on the vehicle perception information to obtain a driving scene recognition result; and
controlling the target vehicle to enter a safe autonomous driving mode in a case that the driving scene recognition result represents that the target vehicle is in a sub-extreme driving scene; where an adverse factor for driving in the sub-extreme driving scene is less than the adverse factor for driving in an extreme driving scene and greater than the adverse factor for driving in a normal driving scene.

In another aspect, the present application also provides a control apparatus for vehicle autonomous driving, the apparatus including:
an acquisition module, configured to acquire vehicle perception information of a target vehicle;
a scene recognition module, configured to perform driving scene recognition based on the vehicle perception information to obtain a driving scene recognition result; and
a safe driving module, configured to control the target vehicle to enter a safe autonomous driving mode in a case that the driving scene recognition result represents that the target vehicle is in a sub-extreme driving scene; where an adverse factor for driving in the sub-extreme driving scene is less than the adverse factor for driving in an extreme driving scene and greater than the adverse factor for driving in a normal driving scene.

In an embodiment of the present application, the vehicle perception information includes a vehicle perception distance;
the controlling the target vehicle to enter the safe autonomous driving mode in the case that the driving scene recognition result represents that the target vehicle is in the sub-extreme driving scene includes:
controlling the target vehicle to enter the safe autonomous driving mode in a case that the vehicle perception distance is within a preset perception range.

In an embodiment of the present application, after controlling the target vehicle to enter the safe autonomous driving mode in the case that the vehicle perception distance is within the preset perception range, the method further includes:
reducing an autonomous driving speed of the target vehicle.

In an embodiment of the present application, the acquiring the vehicle perception information of the target vehicle includes:
acquiring image collection information and multiple types of radar collection information, where the multiple types of radar collection information include radar collection information respectively corresponding to multiple types of radars, and information confidence levels respectively corresponding to the multiple types of radars;
performing information fusion based on the radar collection information respectively corresponding to the multiple types of radars and the information confidence levels respectively corresponding to the multiple types of radars to determine a radar perception distance;
performing pixel point recognition on the image collection information to determine an image perception distance;
performing perception distance fusion based on the radar perception distance and the image perception distance to determine the vehicle perception distance.

In an embodiment of the present application, the vehicle perception information includes a perception object;
the controlling the target vehicle to enter the safe autonomous driving mode in the case that the driving scene recognition result represents that the target vehicle is in the sub-extreme driving scene includes:
controlling the target vehicle to enter the safe autonomous driving mode in a case that the perception object is a target object, where the target object is an object that has an adverse effect on autonomous driving.

In an embodiment of the present application, after controlling the target vehicle to enter the safe autonomous driving mode in the case that the perception object is the target object, the method further includes:
controlling the target vehicle to change lanes in a case that the target object is located in a current lane of the target vehicle.

In an embodiment of the present application, the target object includes an object that reduces an adhesion coefficient of the target vehicle, where the controlling the target vehicle to change lanes in the case that the target object is located in the current lane of the target vehicle includes:
determining a lateral control torque of the target vehicle based on a position relationship between the target vehicle and the target object;
controlling the target vehicle to change lanes based on the lateral control torque.

In an embodiment of the present application, the determining the lateral control torque of the target vehicle based on the position relationship between the target vehicle and the target object includes:
acquiring real-time wheel speed information and real-time driving torque information of the target vehicle;
performing a force analysis based on the real-time wheel speed information and the real-time driving torque information to obtain real-time force information of a wheel;
performing an adhesion coefficient analysis based on the real-time force information and a preset vehicle weight to obtain a real-time adhesion coefficient;
determining a lateral control torque of the target vehicle based on the real-time adhesion coefficient.

In an embodiment of the present application, the position relationship represents a distance between the target object and the target vehicle;
the determining the lateral control torque of the target vehicle based on the position relationship between the target vehicle and the target object includes:
keeping the lateral control torque unchanged in a case that the distance between the target object and the target vehicle is greater than a preset distance.

In another embodiment of the present application, the position relationship represents the distance between the target object and the target vehicle;
the determining the lateral control torque of the target vehicle based on the position relationship between the target vehicle and the target object includes:
reducing the lateral control torque in a case that the distance between the target object and the target vehicle is smaller than or equal to the preset distance.

In an embodiment of the present application, the vehicle perception information includes driving wind information;
the controlling the target vehicle to enter the safe autonomous driving mode in the case that the driving scene recognition result represents that the target vehicle is in the sub-extreme driving scene includes:
controlling the target vehicle to enter the safe autonomous driving mode in a case that the driving wind information is within a preset wind level range.

In an embodiment of the present application, after controlling the target vehicle to enter the safe autonomous driving mode in a case that the driving wind information is within a preset wind level range, the method further includes:
reducing an autonomous driving speed of the target vehicle;
acquiring wind direction information;
controlling a driving direction of the target vehicle to be unchanged based on the wind direction information.

In another aspect, the present application also provides an intelligent recognition device. The device includes a processor and a memory in which at least one instruction or at least one program is stored, and the at least one instruction or at least one program is loaded and executed by the processor to implement the control method for vehicle autonomous driving as described above.

In another aspect, the present application also provides a computer storage medium. The storage medium stores at least one instruction or at least one program, and the at least one instruction or the at least one program is loaded and executed by a processor to implement the control method for vehicle autonomous driving as described above.

According to the above technical schemes, a control method for vehicle autonomous driving described in the present application has the following beneficial effects:
in the control method for vehicle autonomous driving in the present application, the target vehicle is controlled to enter the safe autonomous driving mode in a case that the driving recognition result represents that the target vehicle is in a sub-extreme driving scene, so that the sub-extreme scene can be coped with by presetting the safe autonomous driving mode, which improves the safety of the vehicle autonomous driving in sub-extreme scenes, and avoids the vehicle from exiting the autonomous driving mode in sub-extreme scenes, thereby improving the applicability of autonomous driving for driving scenes.

### BRIEF DESCRIPTION OF DRAWINGS

In order to more clearly illustrate the technical scheme in the present application, a brief description of the drawings required to be used in the embodiments or in the description of the prior art is presented below. It is obvious that the drawings in the description below are merely some embodiments of the present application. For ordinary technical personnel in the field, other drawings can be acquired according to these drawings without any creative effort.
FIG. 1 is a flow diagram of a control method for vehicle autonomous driving provided by an embodiment of the present application.
FIG. 2 is a flow diagram of acquiring vehicle perception information in a control method for vehicle autonomous driving provided by an embodiment of the present application.
FIG. 3 is a flow diagram of lateral torque control in a control method for vehicle autonomous driving provided by an embodiment of the present application.
FIG. 4 is a flow diagram of safe autonomous driving in a control method for vehicle autonomous driving provided by an embodiment of the present application.
FIG. 5 is a structural schematic diagram of a control apparatus for vehicle autonomous driving provided by an embodiment of the present application.
FIG. 6 is a block diagram of a hardware structure of a control method for vehicle autonomous driving provided by an embodiment of the present application.

### DESCRIPTION OF EMBODIMENTS

The technical schemes in the embodiments of the present application will be clearly and completely described in combination with the accompanying drawings in the embodiments of the present application. Obviously, the described embodiments are only part of the embodiments of the present application, but not all the embodiments. Based on the embodiments in the present application, all other embodiments acquired by ordinary technical personnel in the field without creative effort fall within the scope of protection of the present application.

"An embodiment" or "embodiment" herein means a particular feature, structure or characteristic that may be included in at least one implementation of the present application. In the description of the present application, it is to be understood that the terms "above", "below", "left", "right", "top", "bottom", etc., indicate orientation or position relationships based on orientation or position relationships shown in the accompanying drawings and are intended only to facilitate and simplify the description of the present application, but do not indicate or imply that the apparatuses or elements referred to must have a particular orientation, or be constructed and operate in a particular orientation, and should not to be construed as a limitation of the present application. In addition, the terms "first" and "second" are used for descriptive purposes only and should not to be understood as indicating or implying relative importance or as implicitly indicating a quantity of technical features indicated. Thus, a feature defined as "first" or "second" may explicitly or implicitly include one or more such features. Furthermore, the terms "first", "second", etc., are used to distinguish similar objects and are not necessarily used to describe a particular order or sequence. It should be understood that data thus used are interchangeable where appropriate so that the embodiments of the present application described herein can be implemented in an order other than those illustrated or described herein.

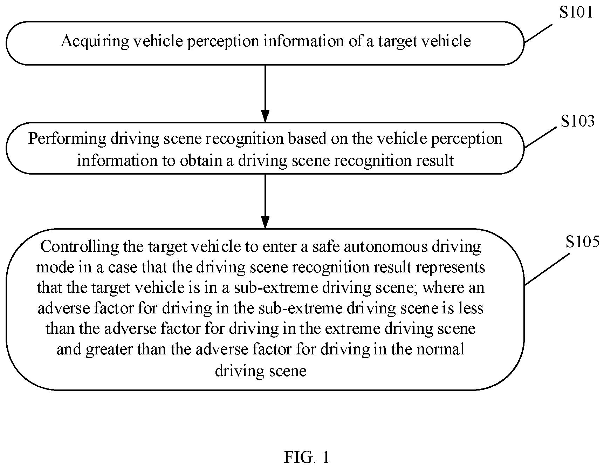

Referring to FIG. 1, a control method for vehicle autonomous driving provided by an embodiment of the present application is introduced. The vehicle autonomous driving control can be applied to an in-car controller or a cloud vehicle controller; the method includes:
S101, acquiring vehicle perception information of a target vehicle; where the vehicle perception information refers to information acquired after a vehicle perceives environment and objects around the vehicle based on a perception module; specifically, the vehicle perception information includes a vehicle perception distance, a perception object, driving wind information and other information.

S103, performing driving scene recognition based on the vehicle perception information to obtain a driving scene recognition result; where the driving scene recognition is to recognize a driving scene of the current autonomous driving; the driving scene recognition result is a driving scene of the current autonomous driving; the driving recognition result includes an extreme driving scene, a sub-extreme driving scene and a normal driving scene, and different driving scenes correspond to different autonomous driving strategies; the extreme driving scene includes fierce wind, rainstorm, blizzard, sandstorm and severe ice on the road; the sub-extreme driving scene includes high wind, heavy rain, heavy snow, moderate dust and water on the road; the normal driving scene includes a driving scene where weather is clear and there is no water on the ground.

S105, controlling the target vehicle to enter a safe autonomous driving mode in a case that the driving scene recognition result represents that the target vehicle is in a sub-extreme driving scene; where an adverse factor for driving in the sub-extreme driving scene is less than the adverse factor for driving in the extreme driving scene and greater than the adverse factor for driving in the normal driving scene; the safe autonomous driving mode refers to a mode of controlling the target vehicle to drive autonomously and safely under the sub-extreme driving scene; the adverse factor refer to a factor that has a reverse impact on safe driving of a vehicle, for example: the road adhesion coefficient is low, and the vehicle is easy to skid; there is mist or rain fog in the air, and a vehicle's vision is poor.

In the embodiments of the present application, the target vehicle is controlled to enter the safe autonomous driving mode in a case that the driving recognition result represents that the target vehicle is in the sub-extreme driving scene, so that the sub-extreme scene can be coped with by presetting the safe autonomous driving mode, thereby improving the safety of the vehicle autonomous driving in the sub-extreme scene, avoiding the vehicle from exiting the autonomous driving mode in sub-extreme scenes, and improving the applicability of autonomous driving for driving scenes.

In an embodiment of the present application, the vehicle perception information includes a vehicle perception distance, where the vehicle perception distance refers to a limit distance that the vehicle can perceive, and the S105 includes:
controlling the target vehicle to enter the safe autonomous driving mode in a case that the vehicle perception distance is within a preset perception range, where the preset perception range refers to that the vehicle perception distance is smaller than the vehicle perception distance in the normal driving scene, but larger than the vehicle perception distance in the extreme driving scene; for example, in a case that the vehicle perception distance is greater than 200m, the target vehicle is in the normal driving scene; in a case that the vehicle perception distance is less than 50m, the target vehicle is in the extreme driving scene; then the preset range is 50~200m, that is, in a case that the vehicle perception distance is within 50~200m, the target vehicle is in the sub-extreme driving scene.

In an embodiment of the present application, in a case that the vehicle perception distance is within 50~200m, the target vehicle may be in a sub-extreme driving scene that affects the driving vision, such as heavy fog, heavy snow, sandstorm, rain and fog. Due to the reduction of the driving vision of the target vehicle, the perception of vehicles or obstacles far ahead of the target vehicle may be obstructed. Therefore, after S105, the above method further includes:
reducing an autonomous driving speed of the target vehicle, where the autonomous driving speed refers to a driving speed of the target vehicle in the autonomous driving mode; by reducing the autonomous driving speed of the target vehicle, in a case that the vehicle perceives that there is a vehicle or an obstacle in front of it, collision can be avoided by braking and decelerating, so that the driving safety of the target vehicle is improved in sub-extreme driving scenes; meanwhile, normal autonomous driving of the vehicle is ensured in the sub-extreme scene.

In a specific embodiment of the present application, the autonomous driving speed of the target vehicle can be reduced based on a corresponding relationship between the vehicle perception distance and the autonomous driving speed, i.e., the vehicle perception distance determines the autonomous driving speed of the target vehicle. For example, in a case that the vehicle perception distance is 200m, the autonomous driving speed of the target vehicle can be 120km/h. At this time, under full braking, the target vehicle can still avoid colliding with the vehicles or obstacles 200m in front of it. In a case that the vehicle perception distance is 100m, the autonomous driving speed of the target vehicle can be 100km/h. At this time, under full braking, the target vehicle can still avoid colliding with the vehicles or obstacles 100m in front of it. In a case that the vehicle perception distance is 50m, the autonomous driving speed of the target vehicle can be 90km/h. At this time, under full braking, the target vehicle can still avoid colliding with vehicles or obstacles 50m in front of it. The autonomous driving speed of the target vehicle is reduced based on the corresponding relationship between the vehicle perception distance and the autonomous driving speed, which not only improves the driving safety of the target vehicle, but also increasing an average speed of the autonomous driving, thus shortening the time for the autonomous driving to reach the destination.

In a specific embodiment of the present application, the corresponding relationship between the vehicle perception distance and the autonomous driving speed can be as follows: for every 5m decrease in the vehicle perception distance, the autonomous driving speed decreases by 1km/h; it may also be that for every 5m decrease in the vehicle perception distance, the autonomous driving speed decreases by 1.5km/h. The specific value is not overly limited here, and the specific value needs to be calculated and acquired based on braking pressure of the target vehicle.

In another specific embodiment of the present application, the corresponding relationship between the vehicle perception distance and the autonomous driving speed may also be a proportional relationship. For example, in a case that the vehicle perception distance is within 50~200m, the autonomous driving speed decreases by 25%~0% from the driving speed in the normal driving scene. Specifically, in a case that the vehicle perception distance is 100 meters, the autonomous driving speed decreases by 17% compared with the driving speed in the normal driving scene. In a case that the vehicle perception distance is 50 meters, the autonomous driving speed decreases by 25% compared with the driving speed in the normal driving scene.

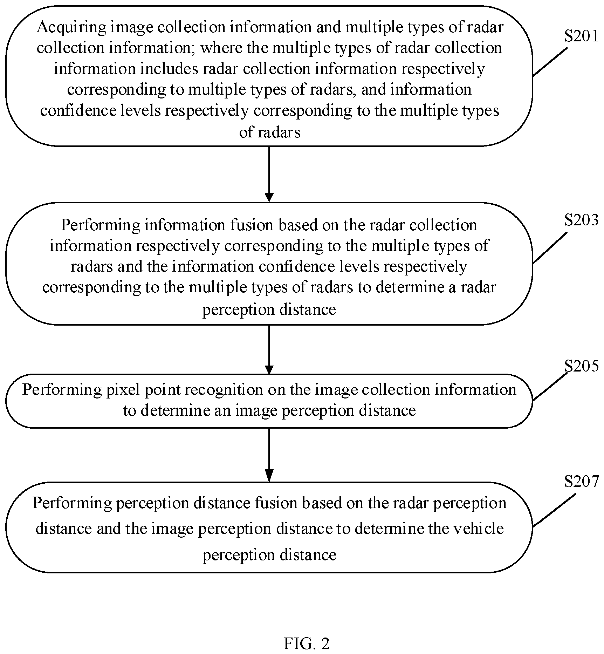

In an embodiment of the present application, with reference to FIG. 2, S101 includes:
S201, acquiring image collection information and multiple types of radar collection information; where the multiple types of radar collection information include radar collection information respectively corresponding to multiple types of radars, and information confidence levels respectively corresponding to the multiple types of radars; the image collection information refers to information of the surrounding scene collected by a camera on the target vehicle; the radar collection information refers to information collected by a radar on the target vehicle; where radars on the target vehicle include multiple types of radars, such as a millimeter wave radar, an ultrasonic radar, a laser radar, an angle radar, and information collected by one type of radar is a type of radar collected information; the information confidence level refers to credibility of the output results of various types of radars.

S203, performing information fusion based on the radar collection information respectively corresponding to the multiple types of radars and the information confidence levels respectively corresponding to the multiple types of radars to determine a radar perception distance; where the information fusion refers to fusion of the output results of multiple types of radar collection information, and the radar perception distance refers to a distance that can be perceived by a radar system in the target vehicle.

S205, performing pixel point recognition on the image collection information to determine an image perception distance; where the pixel point recognition refers to analysis and recognition of pixel points on an acquired image.

S207, performing perception distance fusion based on the radar perception distance and the image perception distance to determine the vehicle perception distance; where the perception distance fusion refers to a process of fusion of the radar perception distance and the image perception distance; specifically, it may take an intersection of the radar perception distance and the image perception distance, or it may take a union of the radar perception distance and the image perception distance; the perception distance fusion is performed based on the radar perception distance and the image perception distance to determine the vehicle perception distance, which can ensure the accuracy of the vehicle perception distance, thereby improving the intelligence of autonomous driving.

In an embodiment of the present application, radar perception distances respectively corresponding to the multiple types of radars can be acquired based on the radar collection information respectively corresponding to the multiple types of radars. Specifically, radars detect objects around the target vehicle through electromagnetic waves of different frequencies, and use the difference between the radar waves emitted and received by the radars to calculate and detect, that is, utilizing the Doppler effect. If the target vehicle is in a sub-extreme driving scene that affects the driving vision, such as heavy fog, heavy snow, sandstorm, rain and fog, the radar waves emitted by radars will be absorbed, resulting in a smaller number of radar waves received by the radar. In a case that the detection targets detected by a radar are all within 50 meters, or the objects pursued by the radar cannot be detected after 50 meters from the target vehicle, the radar perception distance of the radar is considered to be 50 meters.

In an embodiment of the present application, a radar output result with a high confidence level may be selected as the radar perception distance, or the radar perception distance may be obtained by weighted calculation of output results of the multiple types of radars based on the confidence levels.

In an embodiment of the present application, the camera acquires pixel points of a recognition target through an optical component, and the specific recognition target may be taillights. In a case of recognizing symmetrical taillights, it may be equivalent to that a corresponding vehicle is recognized.

In an embodiment of the present application, a 2-megapixel camera may be used to recognize an outline or a part of the recognition target to determine the image perception distance; where the distance between the recognition target and the target vehicle is about 200m, specifically, if the number of pixel points of the recognition target are recognized to be 1000, the image perception distance is determined to be greater than 200m; in a case that the number of pixel points of the recognition target are between 200 and 500, the image perception distance is determined to be within 50m; in a case that the number of pixel points of the recognition target are between 250 and 1000, the image perception distance may be determined to be in a range of 50 to 200m, where the cause of reduction of the pixel points may be the sub-extreme driving scene that affects the driving vision, such as heavy fog, heavy snow, sandstorm, rain and fog.

In an embodiment of the present application, the vehicle perception information includes a perception object; the perception object refers to an object around the target vehicle; the S105 includes:
controlling the target vehicle to enter the safe autonomous driving mode in a case that the perception object is a target object; where the target object is an object that has an adverse effect on autonomous driving, such as standing water on the ground and stones on the road.

In an embodiment of the present application, in the case that the perception object is the target object, the method also includes:
controlling the target vehicle to change lanes in a case that the target object is located in a current lane of the target vehicle; specifically, there may be stones, water or snow in front of the vehicle, and the target vehicle can be changed to a place without stones or water in advance; if the vehicle is in a lane where there is water or snow, the vehicle can be changed to a lane where there is free of water or snow.

In an embodiment of the present application, the target object includes an object that reduces an adhesion coefficient of the target vehicle, and the object that reduces the adhesion coefficient of the target vehicle includes standing water and snow; the controlling the target vehicle to change lanes in the case that the target object is located in the current lane of the target vehicle includes:
1. determining a lateral control torque of the target vehicle based on a position relationship between the target vehicle and the target object; where the position relationship refers to a position condition of the target vehicle and the perception object, and the target object must be in front of the target vehicle; the lateral control torque is torque used to control the target vehicle to change lanes and turn, the smaller the lateral control torque is, the smaller the probability of the target vehicle skidding is;
2. controlling the target vehicle to change lanes based on the lateral control torque; where, through the position relationship between the target vehicle and the target object, the lateral control torque to make the target vehicle change lanes is determined, thus improving the safety of the autonomous driving while guaranteeing the rapid travelling progress of autonomous driving.

In an embodiment of the present application, the method for acquiring the object that reduces the adhesion coefficient of the target vehicle includes:
acquiring image collection information;
analyzing a position of the perception object based on a regional color difference of the image collection information.

In an embodiment of the present application, the position relationship represents a distance between the target object and the target vehicle; the determining the lateral control torque of the target vehicle based on the position relationship between the target vehicle and the target object includes:
keeping the lateral control torque unchanged in a case that the distance between the target object and the target vehicle is greater than a preset distance; by keeping the lateral control torque unchanged in the case that the distance between the target vehicle and the target object is greater than the preset distance, it is possible to change lanes in advance, so that the target vehicle can quickly enter a lane in advance without standing water or snow which reduces the adhesion coefficient of the target vehicle, and thus the intelligence of the autonomous driving is improved and the safety of the autonomous driving is improved.

In another embodiment of the present application, the lateral control torque is reduced in a case that the distance between the target object and the target vehicle is smaller than or equal to the preset distance. By reducing the lateral control torque in the case that the distance between the target vehicle and the target object is smaller than or equal to the preset distance, after the target vehicle enters a lane with standing water or snow that reduces the adhesion coefficient of the target vehicle, the possibility of the target vehicle skidding in the process of lane change or turning is reduced, and the stability of the vehicle is improved, thereby improving the safety of the autonomous driving.

In an embodiment of the present application, if the target vehicle is already in a lane with standing water or snow and other lanes also have standing water or snow, the lateral control torque is reduced.

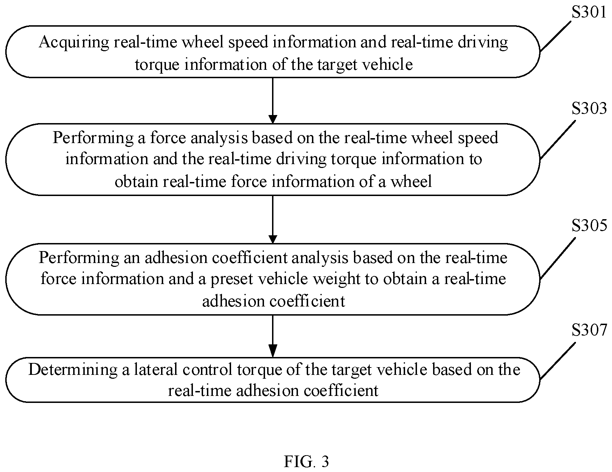

In an embodiment of the present application, referring to FIG. 3, the determining the lateral control torque of the target vehicle based on the position relationship between the target vehicle and the target object further includes:
S301, acquiring real-time wheel speed information and real-time driving torque information of the target vehicle. The real-time wheel speed information refers to the current rotational speed of wheels of the target vehicle, and the real-time driving torque information refers to the current torque to drive the target vehicle autonomously.

S303, performing a force analysis based on the real-time wheel speed information and the real-time driving torque information to obtain real-time force information of a wheel. The force analysis refers to that driving force of a tire can be obtained by calculation based on real-time wheel speed information and real-time driving torque information, and the driving force is equal to ground friction force. Specifically, if the real-time driving torque is x N*m, and the circumference of the tire is about y m, then the force on the wheel segment is x/y N, and the ground friction force can be x/y N, and then the ground adhesion coefficient can be obtained.

S305, performing an adhesion coefficient analysis based on the real-time force information and a preset vehicle weight to obtain a real-time adhesion coefficient. The adhesion coefficient analysis is a process of calculating the adhesion coefficient based on the real-time force information and the preset vehicle weight.

S307, determining a lateral control torque of the target vehicle based on the real-time adhesion coefficient. Specifically, the lateral control torque of the target vehicle can be controlled based on a ratio of decline between the real-time adhesion coefficient and an adhesion coefficient in the normal driving scene. By monitoring the real-time adhesion coefficient, the target vehicle in the process of autonomous driving can be quickly controlled based on a changed adhesion coefficient, thus the intelligence of the autonomous driving is improved and the safety of the autonomous driving is improved.

In a specific embodiment of the present application, in the normal driving scene, the ground adhesion coefficient is about 0.7~1. In the extreme driving scene, the ground adhesion coefficient is 0.3. In a case that the adhesion coefficient is 0.3~0.7, the vehicle is in the sub-extreme driving scene, and the lateral control torque will decrease by 40%~0% with the ground adhesion coefficient. Specifically, in a case that the ground adhesion coefficient decreases to 0.5, the lateral control torque decreases by 20% relative to the lateral control torque in the normal driving scene.

In an embodiment of the present application, the vehicle perception information includes driving wind information, where the driving wind information refers to a wind level in the driving scene of the target vehicle, which can be acquired through a vehicle perception system or from a weather database; the S105 includes:
controlling the target vehicle to enter the safe autonomous driving mode in a case that the driving wind information is within a preset wind level range; where the preset wind level range refers to that a wind level is greater than that in the normal driving scene but smaller than that in the extreme driving scene; specifically, the wind level in the normal driving scene is 0 to 5; the wind level in the extreme driving scene is 9 to 17; the preset wind level range is 6 to 8.

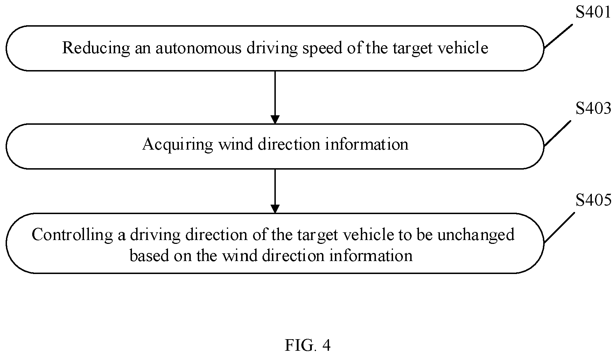

After controlling the target vehicle to enter the safe autonomous driving mode in the case that the driving wind information is within the preset wind level range, referring to FIG.4, the above method further includes:
S401, reducing an autonomous driving speed of the target vehicle; the autonomous driving speed of the target vehicle is reduced to improve the driving stability of the target vehicle in strong winds, so as to improve the safety of autonomous driving;
S403, acquiring wind direction information;
S405, controlling a driving direction of the target vehicle to be unchanged based on the wind direction information; specifically, in a case that the wind direction information shows that the strong wind blows from southeast to northwest, and the target vehicle is driving from south to north, the control torque of the left rear part of the vehicle is appropriately increased, so as to control the driving direction of the target vehicle to be unchanged. Based on the wind direction information, the driving direction of the target vehicle is controlled to be unchanged, and thus the intelligence of autonomous driving is improved and the safety of autonomous driving is improved.

In an embodiment of the present application, the control method further includes:
issuing a request to take over instruction in a case that the driving scene recognition result indicate that the target vehicle is in the extreme driving scene; where the request to take over instruction is an instruction that requests the user to take over control of the vehicle;
exiting an autonomous driving mode.

In the embodiment of the present application, the safety of the vehicle in the extreme scene is improved by requesting the user to take over and exiting the autonomous driving mode in the extreme driving scene.

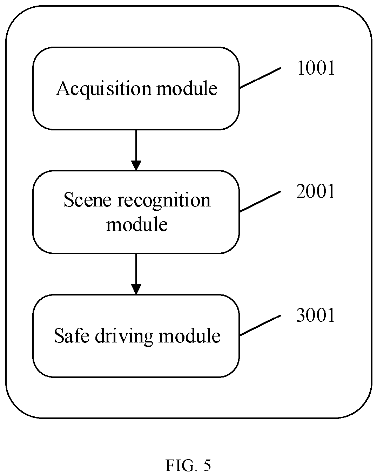

In conjunction with FIG. 5, a control apparatus for vehicle autonomous driving provided in an embodiment of the present application is introduced, and the apparatus includes:
an acquisition module 1001, configured to acquire vehicle perception information of a target vehicle;
a scene recognition module 2001, configured to perform driving scene recognition based on the vehicle perception information to obtain a driving scene recognition result;
a safe driving module 3001, configured to control the target vehicle to enter a safe autonomous driving mode in a case that the driving scene recognition result represents that the target vehicle is in a sub-extreme driving scene; where an adverse factor for driving in the sub-extreme driving scene is less than the adverse factor for driving in an extreme driving scene and greater than the adverse factor for driving in a normal driving scene.

The vehicle perception information includes a vehicle perception distance, a perception object and driving wind information, and the safe driving module includes:
a first safety unit, configured to control the target vehicle to enter the safe autonomous driving mode in a case that the vehicle perception distance is within a preset perception range;
a second safety unit, configured to control the target vehicle to enter the safe autonomous driving mode in a case that the perception object is a target object;
a third safety unit, configured to control the target vehicle to enter the safe autonomous driving mode in a case that the driving wind information is within a preset wind level range.

In an embodiment of the present application, the control apparatus for vehicle autonomous driving also includes:
a deceleration module, configured to reduce an autonomous driving speed of the target vehicle;
a lane change module, configured to control the target vehicle to change lanes in a case that the target object is located in a current lane of the target vehicle;
a wind direction acquisition module, configured to acquire wind direction information;
a driving direction control module, configured to control a driving direction of the target vehicle to be unchanged based on the wind direction information.

In an embodiment of the present application, the acquisition module includes:
an integrated information acquisition unit, configured to acquire image collection information and multiple types of radar collection information, where the multiple types of radar collection information include radar collection information respectively corresponding to multiple types of radars, and information confidence levels respectively corresponding to the multiple types of radars;
a radar information fusion unit, configured to perform information fusion based on the radar collection information respectively corresponding to the multiple types of radars and the information confidence levels respectively corresponding to the multiple types of radars to determine a radar perception distance;
a pixel point recognition unit, configured to perform pixel point recognition on the image collection information to determine a image perception distance;
a perception distance fusion unit, configured to perform perception distance fusion based on the radar perception distance and the image perception distance to determine the vehicle perception distance.

In an embodiment of the present application, a lane change module includes:
a lateral torque control unit, configured to determine a lateral control torque of the target vehicle based on a position relationship between the target vehicle and the target object.

In an embodiment of the present application, the lateral torque control unit includes:
an information acquisition sub-unit, configured to acquire real-time wheel speed information and real-time driving torque information of the target vehicle;
a force analysis sub-unit, configured to perform a force analysis based on the real-time wheel speed information and the real-time driving torque information to obtain real-time force information of a wheel;
an adhesion coefficient analysis sub-unit, configured to perform an adhesion coefficient analysis based on the real-time force information and a preset vehicle weight to obtain a real-time adhesion coefficient;
a torque control sub-unit, configured to determine a lateral control torque of the target vehicle based on the real-time adhesion coefficient.

In an embodiment of the present application, the position relationship represents a distance between the target object and the target vehicle, and the lateral torque control unit includes:
a torque keeping sub-unit, configured to keep the lateral control torque unchanged in a case that the distance between the target object and the target vehicle is greater than a preset distance;
a torque reduction sub-unit, configured to reduce the lateral control torque in a case that the distance between the target object and the target vehicle is smaller than or equal to the preset distance.

An embodiment of the present application also provides an intelligent recognition device, and the intelligent recognition device includes a processor and a memory in which at least one instruction or at least one program is stored, and the at least one instruction or at least one program is loaded and executed by the processor to implement the control method for vehicle autonomous driving as described above.

The memory can be used to store software programs and modules, and the processor executes various functional applications and data processing by running software programs and modules stored in the memory. The memory can mainly include a program storage area and a data storage area, where the program storage area can store an operating system, an application required for a function, etc. The data storage area can store data created according to the use of the device. In addition, the memory may include a high-speed random access memory, as well as a non-volatile memory, such as at least one hard disk storage device, flash memory device, or other volatile solid-state storage device. Accordingly, the memory may also include a memory controller to provide access to the memory for the processor.

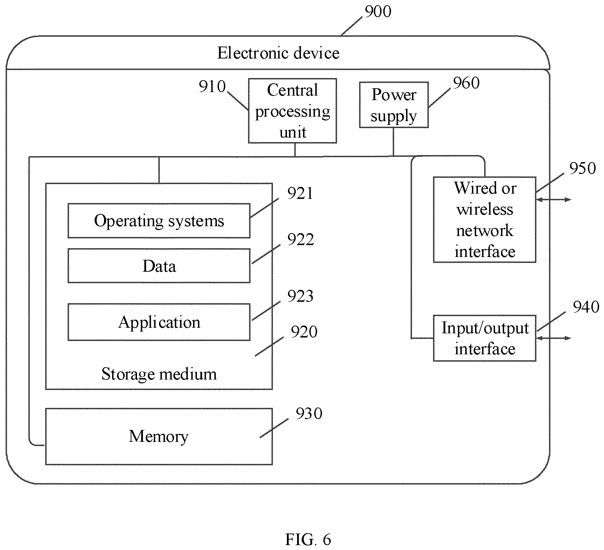

The method embodiments provided in the present application may be executed in electronic devices such as mobile terminals, computer terminals, servers, or similar computing devices. FIG. 6 is a block diagram of a hardware structure of a control method for vehicle autonomous driving provided by an embodiment of the present application. As shown in FIG. 6, the electronic device 900 may vary considerably depending on configuration or performance, and may include one or more central processing units (Central control method for vehicle autonomous driving Processing Units, CPU) 910 (the processor 910 may include but is not limited to processing apparatuses such as a microprocessor MCU or a programmable logic device FPG control method for vehicle autonomous driving, etc.), memory 930 for storing data, one or more storage media for storing applications 923 or data 922 (such as one or more mass storage devices). The memory 930 and the storage medium 920 can be either transient storage or persistent storage. The program stored in the storage medium 920 may include one or more modules, and each module may include a series of instruction operations on the electronic device. Further, the CPU 910 can be set up to communicate with the storage medium 920 to perform a series of instruction operations in the storage medium 920 on the electronic device 900. The electronic device 900 may also include one or more power supplies 960, one or more wired or wireless network interfaces 950, one or more input/output interfaces 940, and/or, one or more operating systems 921, such as Windows ServerTM, M control method for vehicle autonomous driving c OS XTM, UnixTM, LinuxTM, Free a vehicle autonomous driving control apparatus SDTM and so on.

The input/output interface 940 can be used to receive or send data over a network. A specific example of the network may include a wireless network provided by a communication provider of the electronic device 900. In an example, the input/output interface 940 includes a network interface controller (Network Interf a control method for vehicle autonomous driving ce Controller, NIC) that can communicate with the Internet by connecting to other network devices via a base station. In an example, the input/output interface 940 can be an RF (R a control method for vehicle autonomous driving dio Frequency, RF) module, which is used to communicate wirelessly with the Internet.

It can be understood by ordinary technical personnel in the field that the structure shown in FIG. 6 is only illustrative and does not limit the structure of the above electronic device. For example, the electronic device 900 may also include more or fewer components than shown in FIG. 6, or have a different configuration than shown in FIG. 6.

An embodiment of the present application also provides a storage medium, the storage medium stores at least one instruction or at least one program, and the at least one instruction or the at least one program is loaded and executed by a processor to implement the control method for vehicle autonomous driving as described above.

The above description has fully disclosed the embodiments of the present application. It should be noted that any changes made to the embodiments of the present application by technical personnel in the field do not go beyond the scope of the claims of the present application. Accordingly, the scope of the claims in the present application is not limited to the above-mentioned embodiments.

## Claims

1. A control method for vehicle autonomous driving, comprising:
acquiring vehicle perception information of a target vehicle;
performing driving scene recognition based on the vehicle perception information to obtain a driving scene recognition result; and
controlling the target vehicle to enter a safe autonomous driving mode in a case that the driving scene recognition result represents that the target vehicle is in a sub-extreme driving scene; wherein an adverse factor for driving in the sub-extreme driving scene is less than the adverse factor for driving in an extreme driving scene and greater than the adverse factor for driving in a normal driving scene.

2. The control method for vehicle autonomous driving according to claim 1, wherein the vehicle perception information comprises a vehicle perception distance; and
the controlling the target vehicle to enter the safe autonomous driving mode in the case that the driving scene recognition result represents that the target vehicle is in the sub-extreme driving scene comprises:
controlling the target vehicle to enter the safe autonomous driving mode in a case that the vehicle perception distance is within a preset perception range.

3. The control method for vehicle autonomous driving according to claim 2, wherein after controlling the target vehicle to enter the safe autonomous driving mode in the case that the vehicle perception distance is within the preset perception range, the method further comprises:
reducing an autonomous driving speed of the target vehicle.

4. The control method for vehicle autonomous driving according to claim 2, wherein the acquiring the vehicle perception information of the target vehicle comprises:
acquiring image collection information and multiple types of radar collection information, wherein the multiple types of radar collection information comprise radar collection information respectively corresponding to multiple types of radars, and information confidence levels respectively corresponding to the multiple types of radars;
performing information fusion based on the radar collection information respectively corresponding to the multiple types of radars and the information confidence levels respectively corresponding to the multiple types of radars to determine a radar perception distance;
performing pixel point recognition on the image collection information to determine an image perception distance; and
performing perception distance fusion based on the radar perception distance and the image perception distance to determine the vehicle perception distance.

5. The control method for vehicle autonomous driving according to claim 1, wherein the vehicle perception information comprises a perception object; and
the controlling the target vehicle to enter the safe autonomous driving mode in the case that the driving scene recognition result represents that the target vehicle is in the sub-extreme driving scene comprises:
controlling the target vehicle to enter the safe autonomous driving mode in a case that the perception object is a target object, wherein the target object is an object that has an adverse effect on autonomous driving.

6. The control method for vehicle autonomous driving according to claim 5, wherein after controlling the target vehicle to enter the safe autonomous driving mode in the case that the perception object is the target object, the method further comprises:
controlling the target vehicle to change lanes in a case that the target object is located in a current lane of the target vehicle.

7. The control method for vehicle autonomous driving according to claim 6, wherein the target object comprises an object that reduces an adhesion coefficient of the target vehicle, wherein the controlling the target vehicle to change lanes in the case that the target object is located in the current lane of the target vehicle comprises:
determining a lateral control torque of the target vehicle based on a position relationship between the target vehicle and the target object; and
controlling the target vehicle to change lanes based on the lateral control torque.

8. The control method for vehicle autonomous driving according to claim 7, wherein the determining the lateral control torque of the target vehicle based on the position relationship between the target vehicle and the target object comprises:
acquiring real-time wheel speed information and real-time driving torque information of the target vehicle;
performing a force analysis based on the real-time wheel speed information and the real-time driving torque information to obtain real-time force information of a wheel;
performing an adhesion coefficient analysis based on the real-time force information and a preset vehicle weight to obtain a real-time adhesion coefficient; and
determining the lateral control torque of the target vehicle based on the real-time adhesion coefficient.

9. The control method for vehicle autonomous driving according to claim 7, wherein the position relationship represents a distance between the target object and the target vehicle; and
the determining the lateral control torque of the target vehicle based on the position relationship between the target vehicle and the target object comprises:
keeping the lateral control torque unchanged in a case that the distance between the target object and the target vehicle is greater than a preset distance.

10. The control method for vehicle autonomous driving according to claim 7, wherein the position relationship represents a distance between the target object and the target vehicle;
the determining the lateral control torque of the target vehicle based on the position relationship between the target vehicle and the target object comprises:
reducing the lateral control torque in a case that the distance between the target object and the target vehicle is smaller than or equal to a preset distance.

11. The control method for vehicle autonomous driving according to claim 1, wherein the vehicle perception information comprises driving wind information;
the controlling the target vehicle to enter the safe autonomous driving mode in the case that the driving scene recognition result represents that the target vehicle is in the sub-extreme driving scene comprises:
controlling the target vehicle to enter the safe autonomous driving mode in a case that the driving wind information is within a preset wind level range.

12. The control method for vehicle autonomous driving according to claim 11, wherein after controlling the target vehicle to enter the safe autonomous driving mode in the case that the driving wind information is within the preset wind level range, the method further comprises:
reducing an autonomous driving speed of the target vehicle;
acquiring wind direction information;
controlling a driving direction of the target vehicle to be unchanged based on the wind direction information.

13. A control apparatus for vehicle autonomous driving, comprising:
an acquisition module, configured to acquire vehicle perception information of a target vehicle;
a scene recognition module, configured to perform driving scene recognition based on the vehicle perception information to obtain a driving scene recognition result;
a safe driving module, configured to control the target vehicle to enter a safe autonomous driving mode in a case that the driving scene recognition result represents that the target vehicle is in a sub-extreme driving scene, wherein an adverse factor for driving in the sub-extreme driving scene is less than the adverse factor for driving in an extreme driving scene and greater than the adverse factor for driving in a normal driving scene.

14. An intelligent recognition device, wherein the device comprises a processor and a memory in which at least one instruction or at least one program is stored, and the at least one instruction or at least one program is loaded and executed by the processor to implement the control method for vehicle autonomous driving according to any one of claims 1 to 12.

15. A computer storage medium, wherein the storage medium stores at least one instruction, at least one program, code set or instruction set and the at least one instruction, the at least one program, code set or instruction set is loaded and executed by a processor to implement the control method for vehicle autonomous driving according to any one of claims 1 to 12.
